Europäisches Patentamt

**European Patent Office**

**Office européen des brevets**

(11) Veröffentlichungsnummer: **0 154 257**
A2

(12) # EUROPÄISCHE PATENTANMELDUNG

(21) Anmeldenummer: **85101860.6**

(22) Anmeldetag: **21.02.85**

(51) Int. Cl.⁴: **B 29 C 59/06**

(30) Priorität: **29.02.84 DE 3407318**

(43) Veröffentlichungstag der Anmeldung:
**11.09.85 Patentblatt 85/37**

(84) Benannte Vertragsstaaten:
**AT BE CH DE FR GB IT LI NL SE**

(71) Anmelder: **UNILEVER NV**
**Burgemeester s'Jacobplein 1 P.O. Box 760**
**NL-3000 DK Rotterdam(NL)**

(84) Benannte Vertragsstaaten:
**BE CH DE FR IT LI NL SE AT**

(71) Anmelder: **UNILEVER PLC**
**Unilever House Blackfriars P.O. Box 68**
**London EC4P 4BQ(GB)**

(84) Benannte Vertragsstaaten:
**GB**

(72) Erfinder: **Merz, Winfried, Dr.**
**Sollering 13**
**D-8553 Ebermannstadt(DE)**

(72) Erfinder: **Reinke, Dietmar, Dr.**
**R. Mal. Hastimphilo de Moura 338 Ed. Manacà-Apto 1**
**Portal do Morumbi 05640 Sao Paulo(BR)**

(72) Erfinder: **Schmidt, Theo**
**Kiefernstrasse 7**
**D-8550 Forchheim(DE)**

(72) Erfinder: **Sickert, Peter**
**Jägersteig 32**
**D-8550 Forchheim(DE)**

(74) Vertreter: **Hutzelmann, Gerhard et al,**
**Ulmer Strasse 18 Postfach 26 80**
**D-8960 Kempten/Allgäu(DE)**

(54) **Einrichtung zum Herstellen einer perforierten Kunststoffolie.**

(57) Perforiereinrichtung für kunststoffolien, mit einer zylindrischen Siebfläche, die freitragend an zwei scheibenförmigen Endringen gelagert ist. Die Endringe werden auseinandergezogen, um in der Siebfläche eine permanente Spannung zu erzeugen. Dichtleisten eines auf der Innenseite der Siebfläche angeordneten Saugkastens dienen zu ihrer zusätzlichen Abstützung.

Fig.1.

U 7013(K)EU                                    Unilever N.V.

Einrichtung zum Herstellen

einer perforierten Kunststoffolie

Die Erfindung betrifft eine Einrichtung zum Herstellen einer perforierten und evtl. einer geprägten Kunststoffolie, mit einer einstückigen zylinderförmigen Siebfläche, auf welcher die Perforierung und evtl. die Prägung der Folie erfolgt, wobei die Kunststoffolie unmittelbar auf die Siebfläche oder wenigstens annähernd in den zwischen Siebfläche und einer Gegenwalze gebildeten Spalt extrudiert wird.

Bei bekannten Einrichtungen dieser Art ist die Siebfläche auf einem Zylinder angeordnet, der aus einem Stützgerippe mit axial verlaufenden Leisten, auf denen sich die Siebfläche abstützt, besteht. Diese Leisten werden beim Perforieren unter Vacuum auf der Kunststoffolie abgebildet; was bedeutet, daß im Bereich der Leisten keine Perforierung stattfindet.

Dies ist in vielen Fällen unerwünscht, weshalb der Erfindung die Aufgabe zugrunde liegt, eine Einrichtung zu schaffen, mit der eine völlig stegfreie Perforation möglich ist.

Diese Aufgabe wird erfindungsgemäß dadurch gelöst, daß die zylinderförmig ausgebildet Siebfläche lediglich mit ihren beiden stirnseitigen Enden auf scheibenförmigen Endringen drehfest befestigt ist, daß beide Endringe mit Antrieben verbunden sind, die synchron zueinander laufen, und daß innerhalb der zylinderförmigen Siebfläche ein wenigstens annähernd über die ganze axiale Länge der Siebfläche reichender Saugkasten angeordnet ist, auf dessen beiden der Siebfläche zugekehrten Dichtleisten sich diese abzustützen vermag, wobei der Saugkasten an zwei Seitenstuhlungen befestigt ist, welche die Antriebsteile und die beiden scheibenförmigen Endringe tragen, die über Federelemente, welche an einem dieser Endringe angreifen, derart auseinandergezogen sind, daß sich in der Siebfläche eine axiale Zugspannung einstellt.

Hierdurch wird erreicht, daß die Perforierung der Folie ausschließlich durch die Öffnungen in der Siebfläche erzielt wird, so daß Unterbrechungen völlig ausscheiden. Die so perforierte Folie weist ein absolut gleichmäßiges Lochmuster auf.

In der Zeichnung ist ein Ausführungsbeispiel einer erfindungsgemäßen Einrichtung dargestellt. Dabei zeigen:

Fig. 1    einen Längsschnitt durch eine
          zylinderförmige Perforiereinrichtung und

Fig. 2    einen Querschnitt durch diese Einrichtung.

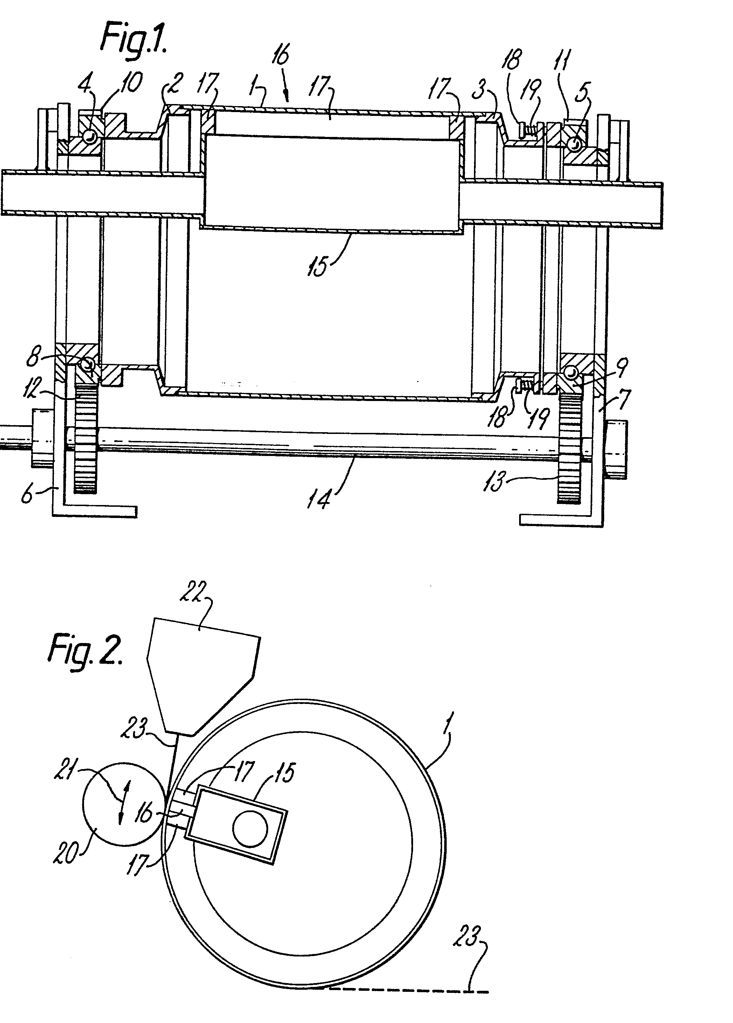

Die in Fig. 1 dargestellte Perforiereinrichtung hat eine endlose zylindrische Siebfläche 1, die mit ihren beiden stirnseitigen Endabschnitten auf scheibenförmigen Endringen 2 und 3 drehfest befestigt ist. Diese beiden Endringe sind über Kugellager 4 und 5 drehbar an jeweils einer Seitenstuhlung 6 bzw. 7 gelagert. Die Außenringe 8 und 9 der beiden Kugellager 4 und 5 sind mit einer Verzahnung 10 bzw. 11 ausgerüstet, in die jeweils ein Antriebszahnrad 12 bzw. 13 eingreift. Diese beiden Antriebszahnräder sitzen auf einer gemeinsamen Antriebswelle 14, wodurch gewährleistet ist, daß die beiden Endringe 2 und 3 synchron zueinander angetrieben werden.

**0154257**

Innerhalb der Perforiereinrichtung ist ein Saugkasten 15 angeordnet, der an beiden Seitenstuhlungen 6 und 7 gelagert ist. An seiner der Siebfläche 1 zugekehrten Seite ist der Saugkasten mit einer Saugöffnung 16 versehen, die durch vier Dichtleisten 17 gebildet ist. Auf diesen Dichtleisten 17 stützt sich die Siebfläche 1 mit ihrer Innenseite ab. Der Endring 3 ist axial verschiebbar auf Bolzen 18 gelagert, die am Außenring 9 des Kugellagers 5 befestigt sind. Zwischen den Köpfen dieser Bolzen 18 und dem Endring 3 sind Druckfedern 19 eingespannt, die den Endring 3 in Richtung auf das Kugellager 5 und damit vom anderen Endring 2 wegdrücken. Damit wird in der Siebfläche 1 eine Zugspannung eingestellt, welche diese versteift.

Wie aus Fig. 2 ersichtlich, ist an der Außenseite der Siebfläche 1, den Dichtleisten 17 gegenüberliegend, eine Gegenwalze 20 angeordnet, deren Lage entlang des Pfeiles 21 veränderbar ist, wodurch die freie Größe der Saugöffnung 16 einstellbar ist. Oberhalb der Siebfläche 1 ist eine Extruderdüse 22 angeordnet, aus der eine Kunststoffolie 23 in den zwischen der Siebfläche 1 und der Gegenwalze 20 gebildeten Spalt extrudiert wird. Die Kunststoffolie 23 kann jedoch geringfügig vor dem Spalt auf die Siebfläche oder die Gegenwalze auftreffen. Durch die Saugwirkung wird die Kunststofffolie 23 im Bereich der Saugöffnung perforiert und je nach Ausgestaltung der Siebfläche und evtl. der Gegenwalze noch zusätzlich geprägt. Als fertige perforierte und evtl. geprägte Folie wird sie dann von der Siebfläche abgenommen.

U 7013(K)EU                         Unilever N.V.

Patentanspruch

Einrichtung zum Herstellen einer perforierten und evtl. geprägten Kunststoffolie,mit einer einstückig zylinderförmigen Siebfläche, auf welcher die Perforierung und evtl. die Prägung der Folie erfolgt, wobei die Kunststoffolie unmittelbar auf die Siebfläche oder wenigstens annähernd in den zwischen Siebfläche und einer Gegenwalze gebildeten Spalt extrudiert wird, dadurch gekennzeichnet, daß die zylinderförmig ausgebildete Siebfläche (1) lediglich mit ihren beiden stirnseitigen Enden auf scheibenförmigen Endringen (2,3) drehfest befestigt ist, daß beide Endringe mit Antrieben (12,13) verbunden sind, die synchron zueinander laufen, und daß innerhalb der zylinderförmigen Siebfläche (1) ein wenigstens annähernd über die ganze axiale Länge der Siebfläche reichender Saugkasten (15) angeordnet ist, auf dessen der Siebfläche zugekehrten Dichtleisten (17) sich diese abzustützen vermag, wobei der Saugkasten (15) an zwei Seitenstuhlungen (6,7) befestigt ist, welche die Antriebsteile und die beiden scheibenförmigen Endringe tragen, die über Federelemente (19), welche an einem dieser Endringe (3) angreifen, derart auseinandergezogen sind, daß sich in der Siebfläche eine axiale Zugspannung einstellt.

Fig.1.

Fig.2.